(19) Europäisches Patentamt
European Patent Office
Office européen des brevets

(11) Veröffentlichungsnummer: **0 250 999 B1**

(12) **EUROPÄISCHE PATENTSCHRIFT**

(45) Veröffentlichungstag der Patentschrift: **22.01.92**

(51) Int. Cl.[5]: **C08F 10/02**, C08F 4/22, C08F 4/60, C08F 4/80

(21) Anmeldenummer: **87108556.9**

(22) Anmeldetag: **13.06.87**

# (54) Verfahren zur Herstellung von verzweigtem Niederdruckpolyethen, neue Niederdruckpolyethene und präformierte bifunktionelle Katalysatoren.

(30) Priorität: **28.06.86 DE 3621763**

(43) Veröffentlichungstag der Anmeldung:
**07.01.88 Patentblatt 88/01**

(45) Bekanntmachung des Hinweises auf die Patenterteilung:
**22.01.92 Patentblatt 92/04**

(84) Benannte Vertragsstaaten:
**BE DE FR GB IT**

(56) Entgegenhaltungen:
**FR-A- 2 274 632**
**US-A- 4 338 219**

(73) Patentinhaber: **BAYER AG**
**W-5090 Leverkusen 1 Bayerwerk(DE)**

(72) Erfinder: **Ostoja-Starzewski, Karl-Heinz Aleksander, Dr.**
**Jeschkenweg 10**
**W-6368 Bad Vilbel(DE)**
Erfinder: **Witte, Josef, Dr.**
**Haferkamp 10**
**W-5000 Koeln 80(DE)**
Erfinder: **Bartl, Herbert, Dr.**
**Eichendorffweg 10**
**W-5068 Odenthal(DE)**
Erfinder: **Reichert, Karl-Heinz, Prof. Dr.**
**Olwenstrasse 39b**
**W-1000 Berlin 28(DE)**
Erfinder: **Vasiliou, Georgios**
**Bachstrasse 3**
**W-1000 Berlin 21(DE)**

**EP 0 250 999 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Verfahren zur Herstellung von verzweigten Niederdruckpolyethenen, neue Niederdruckpolyethene und neue präformierte bifunktionelle Katalysatoren.

Polyethene werden üblicherweise in 3 Gruppen eingeteilt.

Unter HDPE versteht man lineares Polyethen mit einer Dichte von 0,96 bis 0,97 g/cm$^3$. Lineare Ethenpolymerisate mit niedrigerer Dichte werden durch Copolymerisation von Ethen mit $\alpha$-Olefinen wie z.B. 1-Buten oder 1-Octen hergestellt und als LLDPE bezeichnet. Als LDPE bezeichnet man langkettenverzweigte Polymerisate niedriger Dichte, die üblicherweise durch Homopolymerisation von Ethen mit freie Radikale bildenden Katalysatoren unter sehr hohem Druck (>1000 bar) und bei hohen Temperaturen hergestellt werden.

Bekannte Verfahren zur Herstellung von Polyethenen sind beispielsweise das "Ziegler-Natta-Verfahren" und das Hochdruckverfahren, Niederdruckpolyethene HDPE und LLDPE werden hergestellt mit Übergangsmetallkatalysatoren, gegebenenfalls mit Mischungen davon. Aus der DE-Patentschrift 2 660 510 ist ein Verfahren bekannt geworden, bei dem Mischpolymerisate aus Ethen und $C_3$- bis $C_6$-1-Olefinen mit erniedrigter Dichte und einem Schmelzindex bis 2,0 durch Polymerisation von Ethen mit mindestens einem $C_3$- bis $C_6$-1-Olefin unter relativ niedrigem Druck und unter Verwendung von Chrom und Titan enthaltenden Trägerkatalysatoren, die in Luft oder Sauerstoff bei einer Temperatur von 300 bis 900 °C aktiviert worden sind, bezogen auf das Gesamtgewicht des Trägerkatalysators 0,05 bis 3,0 Gew.-% Chrom und 1,5 bis 9,0 Gew.-% Titan enthalten und in denen Chrom und Titan nach der Aktivierung in Form von Oxiden vorliegen, dadurch hergestellt werden, daß man mit Hilfe eines Katalysators, der bis zu 2,5 Gew.-% Fluor enthält, Ethen mit einer solchen Menge an 1-Olefin, die ausreicht, um in dem Mischpolymerisat die gewünschte Dichte und einen Gehalt der $C_{3-6}$-Comonomeren von 1,0 bis 15 Mol-% zu erhalten, in einem Wirbelbettverfahren bei einem $G_{mf}$-Wert von 1,5 bis 10, einer Temperatur von 30 bis 105 °C und einem Druck von weniger als 68,7 bar mischpolymerisiert.

Nachteilig an den bekannten Verfahren zur Herstellung von verzweigten Niederdruckpolyethenen ist, daß neben Ethen wenigstens ein anderes Monomer verwendet werden muß, welches kostspieliger als Ethen ist. Außerdem ist bei den bekannten Verfahren die Länge der Seitenkette limitiert.

Der Erfindung liegt die Aufgabe zugrunde, ein einfaches, preiswertes Verfahren zur Herstellung eines linearen Niederdruckpolyethens mit Seitenketten, die vorzugsweise längerkettig sind, bereitzustellen.

Es wurde nun ein Verfahren zur Herstellung von Niederdruckpolyethenen mit Seitenketten gefunden, welches dadurch gekennzeichnet ist, daß

1. Ethen an einem Ni-haltigen Katalysator oligomerisiert wird und
2. diese Oligomeren an einem Cr-haltigen Katalysator polymerisiert werden, gegebenenfalls in Gegenwart von Ethen.

Oligomerisierung und Polymerisation können in getrennten Reaktoren aber auch nacheinander im gleichen Reaktor durchgeführt werden. In einer bevorzugten Ausführungsform befinden sich wenigstens zeitweise der Ni- und der Cr-haltige Katalysator gleichzeitig im Reaktionsraum. Die Oligomerisierung wird vorzugsweise bis zu einem Molekulargewicht von etwa 1000 durchgeführt.

Es ist auch möglich einen präformierten Katalysator zu verwenden, der erhalten wird durch Reaktion von Nickel-und Chrom-Komponente in Abwesenheit von Ethen.

Gegenstand der Erfindung ist weiterhin ein verzweigtes Niederdruckpolyethen, welches dadurch gekennzeichnet ist, daß die Seitenketten im wesentlichen aus Seitenketten mit 14 bis 200 C-Atemen bestehen, welche Seitenketten verschiedene Längen aufweisen. Die Grenzviskosität, gemessen in Tetralin bei 140 °C, liegt vorzugsweise zwischen 0,4 und 3, das Molekulargewicht vorzugsweise über 10 000. Das Schmelzpunktmaximum liegt vorzugsweise zwischen 120 und 135 °C.

Der Nickel enthaltende Katalysator liegt vorzugsweise als Komplex vor, bei dem wenigstens ein vorzugsweise zweizähniger Ligand Phosphor und Sauerstoff enthält.

Bevorzugte nickelhaltige Katalysatoren sind die folgenden Typen:

1.) Die aus der EP-A 137 389 bekannten Nickelverbindungen, die durch Reaktion einer Nickel-(O)-Verbindung oder einer Nickelverbindung, die in situ in eine Nickel-(O)-Verbindung überführt werden kann mit einem Addukt oder einem Gemisch aus einer chinoiden Verbindung und einem tertiären Phosphin und mit einer Verbindung der Formel (I)

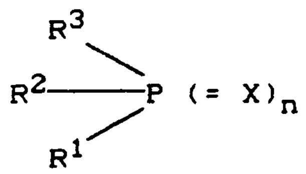

(I)

in der

$R^1$, $R^2$ und $R^3$ unabhängig voneinander gegebenenfalls durch Halogen, Hydroxy, $C_1$-$C_{20}$-Alkoxy, Nitro oder $C_6$-$C_{12}$-Aryloxy substituiertes $C_1$-$C_{20}$-Alkyl, $C_2$-$C_{20}$-Alkenyl, $C_6$-$C_{12}$-Aryl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, $C_6$-$C_{12}$-Aryl-$C_2$-$C_{20}$-alkenyl, $C_1$-$C_{20}$-Alkyl-$C_3$-$C_8$-cycloalkyl und $C_6$-$C_{12}$-Aryl-$C_3$-$C_8$-cycloalkyl, Di-$C_1$-$C_4$-alkylamino, gegebenenfalls substituiertes Phenoxy oder Alkoxy

X O, $NR^4$ oder

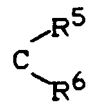

bedeuten,

$R^4$, $R^5$ und $R^6$ unabhängig voneinander Wasserstoff, Acyl, Silyl, Halogen, Cyano, Nitrophenyl oder $R^1$

n Null oder 1 bedeuten

herstellbar sind.

Geeignete tertiäre Phosphine entsprechen der Formel (II)

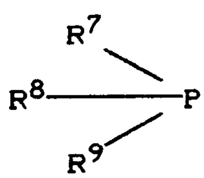

(II)

worin

$R^7$, $R^8$ und $R^9$ unabhängig voneinander, gegebenenfalls durch Halogen, Hydroxy, $C_1$-$C_{20}$-Alkoxy oder $C_6$-$C_{12}$-Aryloxy substituiertes $C_1$-$C_{20}$-Alkyl, $C_6$-$C_{12}$-Aryl, $C_2$-$C_{30}$-Alkenyl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, Halogen, Hydroxy, $C_1$-$C_{20}$-Alkoxy oder $C_6$-$C_{12}$-Aryloxy bedeuten.

Als chinoide Verbindungen kommen o- oder p-chinoide Verbindungen der Benzol- und Naphthalinreihe sowie Anthrachinone in Frage, die noch substituiert sein können.

Beispielhaft seien p-Benzochinon, Chloranil, 1,4-Naphthochinon und 9,10-Anthrachinon genannt.

Bevorzugte Reste $R^1$, $R^2$ und $R^3$ sind $C_1$-$C_6$-Alkyl, Cyclohexyl, Phenyl, Tolyl, Benzyl, Di-$C_1$-$C_4$-alkylamino, Phenoxy und Methoxy.

Bevorzugte Reste $R^4$, $R^5$ und $R^6$ sind Wasserstoff, Acetyl, Benzoyl, $C_1$-$C_6$-Alkyl, Phenyl, $C_1$-$C_4$-Alkylphenyl, Chlorphenyl, Nitrophenyl, Trimethylsilyl, Chlor und Cyano.

$R^7$, $R^8$, $R^9$ sind vorzugsweise Cyclohexyl, Phenyl, Tolyl, Benzyl, Vinyl und $C_1$-$C_4$-Alkyl.

2.) Die aus der EP-A 101 927 bekannten Nickelverbindungen, herstellbar durch Umsetzung einer Nickel-(O)-Verbindung oder einer Verbindung, die in situ in eine Nickel-(O)-Verbindung überführt werden kann, mit Verbindungen der Formeln (I) und (III)

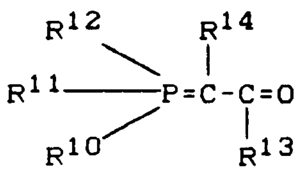

(III)

worin

| | |
|---|---|
| $R^{10}$ - $R^{14}$ | unabhängig voneinander, gegebenenfalls durch Halogen, Hydroxy, $C_1$-$C_{20}$-Alkoxy oder $C_6$-$C_{12}$-Aryloxy substituiertes $C_1$-$C_{20}$-Alkyl, $C_6$-$C_{12}$-Aryl, $C_2$-$C_{30}$-Alkenyl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, Halogen, Hydroxy, $C_1$-$C_{20}$-Alkoxy oder $C_6$-$C_{12}$-Aryloxy, außerdem |
| $R^{13}$ | Wasserstoff, |
| $R^{14}$ | Wasserstoff, Acyl oder Sulfonat bedeuten und worin |
| $R^{10}$ | vorzugsweise $C_6$-$C_{12}$-Aryl ist. |

$R^{11}$ - $R^{14}$ sind vorzugsweise Cyclohexyl, Phenyl, Tolyl, Benzyl, Vinyl und $C_1$-$C_4$-Alkyl.

$R^{13}$ ist bevorzugt Wasserstoff oder $C_1$-$C_4$Alkoxy, $R^{14}$ bevorzugt Wasserstoff, Sulfonat, Acetyl oder Benzoyl.

3.) Nickel-Verbindungen, die durch Reaktion einer Nickel-(O)-Verbindung oder einer Nickelverbindung, die in situ in eine Nickel-(O)-Verbindung überführt werden kann mit einem Addukt oder einem Gemisch aus Maleinsäureanhydrid (MSA) und einem tertiären Phosphin, gegebenenfalls mit einer Verbindung der Formel (I) und gegebenenfalls mit einer Organoaluminiumverbindung herstellbar sind.

Geeignete tertiäre Phosphine entsprechen der Formel (I) mit n = Null.

Geeignete Organoaluminiumverbindungen sind z.B. Trialkyl- und Trialkoxyaluminiumverbindungen, in denen die Alkyl- und Alkoxygruppen vorzugsweise 1 bis 4 C-Atome aufweisen.

Bevorzugt werden pro Mol Nickel-(O)-Verbindung je 1 bis 4 Mole MSA und des tertiären Phosphins und 0 bis 4 Mole der Verbindung der Formel (I) eingesetzt, besonders bevorzugt pro Mol der Nickel-(O)-Verbindung 1 Mol MSA, sowie tertiäres Phosphin und 1 Mol der Verbindung der Formel (I).

Die Umsetzungstemperatur beträgt 0 bis 100 °C, insbesondere 20 bis 70 °C.

Für die unter 1.) bis 3.) genannten nickelhaltigen Katalysatoren gilt übereinstimmend:

Als Nickel-(O)-Verbindungen seien beispielhaft Ni(cyclooctadien)$_2$ und Ni(allyl)$_2$ genannt.

Als Nickelverbindungen, die in situ in Nickel-(O)-Verbindungen überführt werden können, seien beispielsweise aufgeführt: Ni-acetylacetonat, Ni-octanoat und Ni-stearat, die mit Hilfe von üblichen Reduktionsmitteln wie Boranat, Alanat, Aluminiumalkylen oder Lithiumorganylen reduziert werden können.

Die Reaktion wird unter Ausschluß von Sauerstoff, vorzugsweise in einem Lösungsmittel das gegenüber den Reaktanden inert sein muß, wie Benzol, Toluol, Cyclohexan und n-Hexan, durchgeführt.

Nach Beendigung der Reaktion kann der Katalysator ohne Isolierung direkt zur Oligomerisation von Ethen eingesetzt werden. Das Reaktionsgemisch kann auch filtriert werden, wobei das Filtrat, das den Katalysator enthält, zur Oligomerisation eingesetzt werden kann. Der Katalysator kann auch durch Einengen der Reaktionsmischung oder durch Einengen und/oder Abkühlen des Filtrates isoliert werden.

Weitere geeignete nickelhaltige Katalysatoren für die Oligomerisierung sind bekannt aus den niederländischen Patentanmeldungen 70 16 037, 70 16 039, 68 13 667, 70 15 984, den deutschen Offenlegungsschriften 2 053 758, 1 931 060, 2 264 088, den US-Patentschriften 3 424 816, 3 825 615, 3 737 475, 3 354 236, den belgischen Patenten 7 60 387, 7 58 106, 7 44 304 und dem kanadischen Patent 7 70 655.

Die Menge der verwendeten Nickel-Verbindung ist nicht kritisch. Typische Katalysatorkonzentrationen liegen zwischen $10^{-2}$ bis $10^{-4}$ Mol pro Liter. Die Menge an Katalysator, bezogen auf Ethen, liegt im Bereich von 0,005 bis 10 Gew.-%, vorzugsweise 0,01 bis 0,1 Gew.-%.

Für die Oligomerisation mit den Ni-haltigen Katalysatoren eignen sich folgende Verfahrensweisen:

a) Vorlegen des festen, gelösten oder suspendierten Katalysators (oder seiner Komponenten), Zugabe des Ethens, bei der gewünschten Temperatur

b) Vorlegen des Ethens, Injektion der Katalysator-Lösung bzw. -Suspension (oder seiner Komponenten)

c) kontinuierliches Dosieren der Katalysator-Lösung oder -Suspension (oder seiner Komponenten) bei vorgegebenen gewünschten Polymerisationsbedingungen (Druck, Temperatur) zum Ethen.

Die Oligomerisation kann in einem Lösungs- bzw. Verdünnungsmittel bzw. Suspensionsmittel durchgeführt werden, wobei beispielsweise Aliphaten wie n-Hexan, Cyclohexan, Aromaten wie Benzol, Toluol, Xylol, Chlorbenzol, Ketone wie Aceton, Methylethylketon, Ester wie Essigsäureethylester, Säureamide wie Dimethylformamid und Ether wie Tetrahydrofuran oder Mischungen dieser Lösungsmittel in Frage kommen.

Die Oligomerisation kann sowohl kontinuierlich als auch diskontinuierlich durchgeführt werden.

Die Oligomerisationstemperatur beträgt bevorzugt 20 bis 200 °C, insbesondere von 60 bis 150 °C. Der anzuwendende Ethendruck beträgt mindestens 1 bar, bevorzugt sind 5 bis 1000 bar.

Für die Polymerisation werden Cr-haltige Katalysatoren verwendet, vorzugsweise Chrom-(II)-und Chrom-(III)-Verbindungen, die sich auf einem Träger hoher Oberfläche befinden. Vorzugsweise sind die Chromverbindungen koordinativ ungesättigt. Silicium- und Aluminiumoxide sowie Mischungen davon werden vorzugsweise als Träger verwendet. Es können aber auch andere übliche Träger eingesetzt werden. Besonders bevorzugte Träger sind Silicagele und Aluminiumoxidgele, vorzugsweise mit einer Oberfläche von 300 bis 600 $m^2/g$.

Die Herstellung der Cr-haltigen Katalysatoren erfolgt vorzugsweise in der aus der DE-A-3 427 319 bekannten Weise durch Auftragen einer Chrom-(VI)-Verbindung auf einen Träger, anschließende Aktivierung, Reduktion und übliche Weiterbehandlung.

Ein weiterer Gegenstand der Erfindung sind präformierte bifunktionelle Katalysatoren erhältlich durch Kontaktieren eines nickelhaltigen Oligomerisationskatalysators mit einem chromhaltigen Polymerisationskatalysator in einem vorzugsweise inertem Reaktionsmedium, vorzugsweise in einem Kohlenwasserstoff gegebenenfalls bei erhöhter Temperatur.

Bevorzugte nickelhaltige Katalysatoren sind die oben unter 1. bis 3. angegebenen Katalysatoren.

Bevorzugte chromhaltigen Katalysatoren sind die oben angegebenenen Chrom-(II)- und Chrom-(III)-Verbindungen, insbesondere in Form von Trägerkatalysatoren.

Der präformierte bifunktionelle Katalysator kann vor Verwendung isoliert und gegebenenfalls als Feststoff gelagert werden.

Das erfindungsgemäße Verfahren ermöglicht es überraschenderweise, ausgehend von einem einzigen Ausgangsstoff (Ethen) verzweigte Niederdruckpolyethene zu erhalten. Die erfindungsgemäßen neuen Polyethene mit gleichzeitig verschieden langen Seitenketten zeigen überraschende wertvolle Eigenschaften, insbesondere gute mechanische Eigenschaften.

Sie lassen sich zur Herstellung von Formkörpern und Folien verwenden.

<u>Beispiel 1</u>

Ein 12-Liter-Autoklav wurde 3 Stunden bei 120 °C in Vakuum ausgeheizt, mit Stickstoff als Schutzgas gefüllt, abgekühlt, 7 Liter Cyclohexan eingepumpt und 1 Liter abdestilliert. Bei 95 °C Innentemperatur und einem Ethendruck von 15 bar, wurden während 1 Stunde 3,9 g (5,56 mmol) $NiPh(Ph_2PCHCPhO)$ $(PPh_3)$ in 200 ml Toluol eingepumpt. Die Menge an aufgenommenem Ethen betrug ca. 1,5 kg. Der Autoklav wurde abgekühlt und entspannt. Nach Entfernen des Lösungsmittels im Vakuum wurde das warm verflüssigte α-Olefin in kaltem Pentan ausgefällt, abgenutscht und im Vakuum getrocknet.

Zur Copolymerisation wurde ein 12-Liter-Autoklav im Vakuum ausgeheizt, mit Argon als Schutzgas gefüllt, 5 Liter n-Hexan eingepumpt, 1 Liter abdestilliert, und unter Argon abgekühlt. Dann wurden 625 g des α-Olefins (siehe oben), sowie 60,3 g Chromkatalysator eingefüllt (Silicagel-Träger: Merck 7733, 800 °/350 °C, $Cr^{II}$ 0,91 %, OZ 2,17). Unter 8 bar Ethen Kaltdruck wurde auf 140 bis 150 °C aufgeheizt und während der Reaktion der Druck bei 18 bar gehalten. Nach ca. 2,5 h wurde abgekühlt, entspannt und das feste Produkt isoliert und im Vakuum getrocknet. Es hatten sich 1,3 kg Polymer gebildet.

<u>Beispiel 2</u>

Ein 40-Liter-Autoklav wurde in Vakuum ausgeheizt, mit Stickstoff-Schutzgas gefüllt, 18 Liter Cyclohexan eingepumpt, wovon 2 Liter abdestilliert wurden. Bei 85 °C und 10 bis 12 bar Ethen wurden 1,06 g (2 mmol) $NiPh(Ph_2PCHCPhO)$ $(Me_3PCH_2)$ in 200 ml Toluol zugepumpt.

Nach beendeter Reaktion wurde abgekühlt, entspannt und das feste α-Olefin durch Filtration isoliert und in Vakuum getrocknet.

Ausbeute: 2344 g
Fp (DSC) : 122 °C
Grenzviskosität in Tetralin bei 140 °C: 0,12 dl/g

Zur Copolymerisation wurde ein 6-Liter-Autoklav im Vakuum ausgeheizt, mit Argon als Schutzgas gefüllt, 700 g des α-Olefins eingefüllt, auf 120 °C erhitzt, evakuiert, 4 bar Argon aufgedrückt und abgekühlt, im Argongegenstrom mit 0,5 Liter n-Hexan und 6,55 g Chromkatalysator (Silicagel-Träger: Grace 952, 800 °/350 °C, $Cr^{II}$ 1,20 %, OZ 2,18) beschickt. Bei 150 °C/20 bar Ethen wurden polymerisiert. Nach 5 Stunden wurde abgekühlt, der Autoklav entspannt und nach Isolierung und Trocknung erhielt man 917 g festes Polymer.

Fp (DSC): 125° C
Grenzviskosität in Tetralin bei 140° C: 0,65 dl/g

Beispiel 3

In einem Vakuum ausgeheizten und mit Argon-Schutzgas gefüllten Autoklaven wurden 7 Liter Cyclohexan eingepumpt und anschließend 1 Liter abdestilliert. Nach Abkühlen unter Schutzgas wurde im Argon-Gegenstrom 1,45 g (2,3 mMol) $NiPh(Ph_2PCHCMeO)$ $(Pr_3^i\ PCHPh)$ eingefüllt. Unter 5 bar Ethen-Kaltdruck wurde die Innentemperatur auf 100° C erhöht. Dann ließ man 1 Stunde bei 100° C/18 bar reagieren. Nach Abkühlen und Entspannen des Autoklaven wurden im Argon-Gegenstrom 5,8 g Chromkatalysator eingefüllt. (Silikagel-Träger: Grace 952, 800° /350° C, $Cr^{II}$ 0,84 %, OZ 2,48.)
Bei 100° C/18 bar Ethen wurde anschließend copolymerisiert. Die Aufarbeitung, wie in Beispiel 1 beschrieben, ergab 408 g festes Polymer. Fp. (DSC) 128° C.
Grenzviskosität in Tetralin bei 140° C:1,90 dl/g.

Beispiel 4

In einem entsprechend vorbereiteten Autoklaven wurden 7 Liter n-Hexan eingepumpt, 1 Liter abdestilliert und nach Abkühlen im Argon-Gegenstrom 6,82 g Chromkatalysator (Silikagel-Träger: Grace 952, 800° /350° C, $Cr^{II}$ 1,20 %, OZ 2,18) und 1,55 g (2.21 mMol) $NiPh(Ph_2PCHCPhO)$ $(Ph_3P)$ eingefüllt und mit 10 Mol Ethen bei 100° C zur Reaktion gebracht. Nach beendeter Reaktion und Aufarbeitung entsprechend Beispiel 1 wurden 210 g festes Polymer ausgewogen.
Fp. (DSC) 128° C
Grenzviskosität in Tetralin bei 140° C 1,21 dl/g.

Beispiel 5

In einen 100 ml Druckautoklaven wurden 60 ml Cyclohexan vorgelegt. Dazu wurde eine Lösung von 17,5 mg Ni-Ylid-Katalysator $NiPh(Ph_2PCHPhO)(Me_3PCH_2)$ in 5 ml Toluol bei 20° C in den Reaktor gegeben. Anschließend wurden 264 mg des Katalysators Cr-Silikagel (800-350), $Cr^{II}$ 0,87, OZ = 2,31 zugegeben und die Reaktionsmischung 15 min lang bei Raumtemperatur gerührt.

Danach wurde die Temperatur in ca. 10 min auf 85° C erhöht und bei 85-90° C die Polymerisation durch Zugabe von Ethen gestartet (Ethen-Druck ~ 9,6 bar). Die Temperatur stieg auf ca. 100° C an und blieb während 1h konstant. Nach 60 min Reaktionszeit wurde abgekühlt, entspannt und das Polymerisat (4,5 g) isoliert.

HPLC-Messungen ergaben, daß ein einziges Polymeres mit monomodaler Verteilung entstanden ist. Im Polymeren sind keine freien $\alpha$-Olefine zu finden. Ergebnis der DSC-Analyse: Schmelztemperatur = 132° C.

Im Vergleich zu einem unter gleichen Bedingungen nur mit dem Cr-Katalysator hergestellten HDPE mit Schmelztemperatur = 137° C hat das Produkt eine geringere Molmasse und einen niedrigeren Schmelzpunkt.

**Patentansprüche**

**1.** Verfahren zur Herstellung von Niederdruckpolyethenen mit Seitenketten, dadurch gekennzeichnet, daß

1. Ethen an einem Ni-haltigen Katalysator oligomerisiert wird, und
2. diese Oligomeren an einem Cr-haltigen Katalysator polymerisiert werden.

**2.** Verfahren nach Anspruch 1, dadurch gekennzeichnet, daß der nickelhaltige Katalysator ein Nickelkomplex ist, bei dem wenigstens ein Ligand Phosphor und Sauerstoff enthält.

**3.** Verfahren nach Anspruch 1, dadurch gekennzeichnet, daß der chromhaltige Katalysator ein Chrom-Trägerkatalysator ist.

**4.** Verfahren nach Anspruch 1, dadurch gekennzeichnet, daß Oligomerisierung und Polymerisation im gleichen Reaktor nacheinander durchgeführt werden.

**5.** Verfahren nach Anspruch 1, dadurch gekennzeichnet, daß der nickel- und der chromhaltige Katalysator

wenigstens zeitweise gleichzeitig im Reaktionsraum enthalten sind.

**6.** Verfahren nach Anspruch 1, dadurch gekennzeichnet, daß der Ni-haltige und der Cr-haltige Katalysator in Form eines präformierten bifunktionellen Ni/Cr-Katalysators verwendet wird.

**7.** Verfahren nach wenigstens einem der vorhergehenden Ansprüche, dadurch gekennzeichnet, daß die Polymerisation in Gegenwart von Ethen stattfindet.

**8.** Verzweigtes Niederdruckpolyethen, dadurch gekennzeichnet, daß die Seitenketten im wesentlichen aus Seitenketten mit 14 bis 200 C-Atomen bestehen, welche Seitenketten verschiedene Längen aufweisen.

**9.** Präformierter bifunktioneller Katalysator erhältlich durch Kontaktieren eines nickelhaltigen Oligomerisationskatalysators mit einem chromhaltigen Polymerisationskatalysator in einem inerten Reaktionsmedium.

## Claims

**1.** A process for the production of low-pressure polyethenes having side chains, characterized in that
1. ethene is oligomerized on an Ni-containing catalyst and
2. the oligomers are polymerized on a Cr-containing catalyst.

**2.** A process as claimed in claim 1, characterized in that the nickel-containing catalyst is a nickel complex in which at least one ligand contains phosphorus and oxygen.

**3.** A process as claimed in claim 1, characterized in that the chromium-containing catalyst is a supported chromium catalyst.

**4.** A process as claimed in claim 1, characterized in that the oligomerization and polymerization are carried out successively in the same reactor.

**5.** A process as claimed in claim 1, characterized in that the nickel-containing catalyst and the chromium-containing catalyst are present at least periodically at the same time in the reaction zone.

**6.** A process as claimed in claim 1, characterized in that the Ni-containing catalyst and the Cr-containing catalyst are used in the form of a preformed bifunctional Ni/Cr catalyst.

**7.** A process as claimed in at least one of the preceding claims, characterized in that the polymerization is carried out in the presence of ethene.

**8.** Branched low-pressure polyethene, characterized in that the side chains consist essentially of $C_{14-200}$ side chains having different lengths.

**9.** A preformed bifunctional catalyst obtainable by contacting a nickel-containing oligomerization catalyst with a chromium-containing polymerization catalyst in an inert reaction medium.

## Revendications

**1.** Procédé de production de polyéthylènes basse pression portant des chaînes latérales, caractérisé par le fait que
1. De l'éthylène est oligomérisé sur un catalyseur contenant du nickel et
2. ces oligomères sont polymerises sur un catalyseur contenant du chrome.

**2.** Procédé suivant la revendication 1, caractérisé en ce que le catalyseur contenant du nickel est un complexe de nickel dans lequel au moins un ligand contient du phosphore et de l'oxygène.

**3.** Procédé suivant la revendication 1, caractérisé en ce que le catalyseur contenant du chrome est un catalyseur au chrome sur un support.

4. Procédé suivant la revendication 1, caractérisé en ce que l'oligomérisation et la polymérisation sont effectuées successivement dans le même réacteur.

5. Procédé suivant la revendication 1, caractérisé en ce que le catalyseur contenant du nickel et le catalyseur contenant du chrome sont contenus simultanément au moins par intervalles dans la chambre de réaction.

6. Procédé suivant la revendication 1, caractérisé en ce que le catalyseur contenant du nickel et le catalyseur contenant du chrome sont utilisés sous forme d'un catalyseur Ni/Cr-bifonctionnel préformé.

7. Procédé suivant au moins l'une des revendications précédentes, caractérisé en ce que la polymérisation a lieu en présence d'éthylène.

8. Polyéthylène basse pression ramifié, caractérisé en ce que les chaînes latérales sont principalement constituées de chaînes latérales ayant 14 à 200 atomes de carbone, ces chaînes latérales présentant des longueurs différentes.

9. Catalyseur bifonctionnel préformé, obtenu par mise en contact d'un catalyseur d'oligomérisation contenant du nickel avec un catalyseur de polymérisation contenant du chrome dans un milieu réactionnel inerte.